(19) Europäisches Patentamt
European Patent Office
Office européen des brevets

(11) Publication number: **0 278 576 B1**

(12) **EUROPEAN PATENT SPECIFICATION**

(45) Date of publication of patent specification:
17.04.91 Bulletin 91/16

(51) Int. Cl.⁵: **F25C 1/22,** A23G 9/22,
B65D 85/78

(21) Application number: 88200228.0

(22) Date of filing: 09.02.88

(54) Ice confection in a package.

(30) Priority: 12.02.87 GB 8703195

(43) Date of publication of application:
17.08.88 Bulletin 88/33

(45) Publication of the grant of the patent:
17.04.91 Bulletin 91/16

(84) Designated Contracting States:
AT BE CH DE ES FR GB GR IT LI NL SE

(56) References cited:
CH-A- 580 521
DE-A- 3 617 569
FR-A- 1 342 907
FR-A- 2 348 653
GB-A- 2 145 363
US-A- 2 062 278
US-A- 3 221 473
US-A- 3 311 231

(56) References cited:
US-A- 3 410 699
US-A- 3 805 486
US-A- 4 001 440
US-A- 4 413 461

(73) Proprietor: UNILEVER NV
Burgemeester s'Jacobplein 1 P.O. Box 760
NL-3000 DK Rotterdam (NL)
BE CH DE ES FR GR IT LI NL SE AT
Proprietor: UNILEVER PLC
Unilever House Blackfriars P.O. Box 68
London EC4P 4BQ (GB)
GB

(72) Inventor: Voûte, Magdalena Aldonse
Osterstrasse 120
W-2000 Hamburg 20 (DE)

(74) Representative: Keppels, Willem Richard
Engelbertus Gerardus, Drs. et al
Unilever N.V. Patent Division P.O.Box 137
NL-3130 AC Vlaardingen (NL)

## Description

## ICE CONFECTION IN A PACKAGE

The invention relates to a 3D ice confection in an impervious package of packaging material. "3D" in the ice confection art relates to shapes comprising protruding parts preventing their demoulding by simple withdrawal from a one-end-open rigid mould. 3D ice confections and a method of manufacturing same are described in FR-A-2 348 653. This document describes thermoforming two half shells of rigid plastic material, uniting these shells to form a mould and filling this mould with ice confection or similar material. For distribution and sale this product has to be wrapped or to be closed at its filling opening, requiring one additional handling step. However the disclosure is silent about how to do this.

The last few years 3D ice confection products receive a lot of attention and many fancy shapes such as fairy and strip characters and animals are moulded into ice confection material. Normally, the ready ice confection products are packed in opaque packaging material, loosely enclosing the products, such as by flow wrapping. As a result, the attractive shape is entirely hidden and becomes visible again after the consumer has bought it. Using transparent packaging material does not result in a permanent visibility because it gets dim even if anti-fogging coatings are applied.

The invention seeks to take more advantage of the attractive shape of previously shaped 3D ice confection products and, in a preferred embodiment, even to add visual appeal thereto. For that the invention provides a 3D ice confection product, enclosed in an impervious package of packaging material, which product according to the invention is characterised in that part of the packaging material is self-supporting and has been pre-shaped so as to exactly conform to the shape of the ice confection product and the remainder is transparent, flexible and being put in tight engagement with the corresponding surface of the ice confection product by skin packing.

A 3D ice confection product usually has a front position such as the face in case of characters and it is preferred that this front position at least is in engagement with transparent packaging material.

In a convenient and referred embodiment, the self-supporting part is provided with an outwardly extending flange, which is usually lying in a plane, which flange is provided with a decorative design and/or shape. This flange may be very wide and is suitable for decoration and advertisement purposes.

The invention also relates to a method of packaging a 3D ice confection product wherein a sheet of self-supporting packaging material is thermoformed by a pressure difference, so that its internal shape exactly conforms to the shape of part of the ice confection product, this product is put into this thermoformed part and is tightly enclosed therein by skin packing with a transparent packaging material.

In a preferred embodiment of the invention the thermoformed part of the self-supporting packaging material is given a relatively wide flange which, while or after closing the package, is provided with a decorative shape.

As an example of the so called skin packing method may be referred to US-A-3 805 486, according to which a relatively rigid, self-supporting receptacle is moulded, the product to be packed is put therein and a thin flexible film is put on top, the air is removed from between the receptacle, the product and the film and the receptacle and film are sealed together.

The invention will be exemplified in the following non-limiting description of some embodiments which are shown in the drawings.

Fig. 1 is a perspective view of a ball-shaped ice confection product on a racket.

Fig. 2 is a cross-sectional view of Fig. 1.

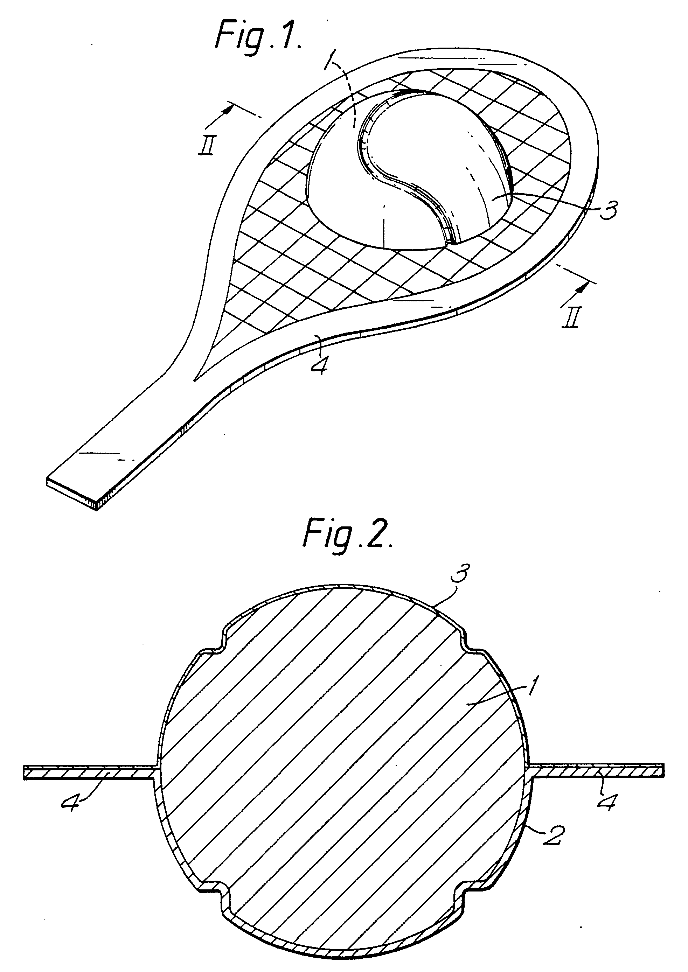

In Fig. 1 and Fig. 2 a ball 1 of an ice confection product is shown, enclosed in a two-piece package.

The lower part 2 is pre-shaped in a usual manner such as by thermoforming, so that the internal shape thereof is substantially complementary to say half of the ball 1 of ice confection material. The outwardly extending flange 4 of this part is shaped and decorated as a tennis racket. The ball-shaped ice confection product 1 is accommodated into the pre-shaped art 2 and the package is completed by a usual skin packing process with transparent, flexible material, thereby forming the other part 3 of the package, lying closely against the surface of the ice confection product 1. By the self-adhesive properties of the usual material used for skin packing the two parts of the package are united.

## Claims

1. 3D ice confection product, enclosed in an impervious package of packaging material, characterised in that part of the packaging material is self-supporting and has been pre-shaped so as to exactly conform to the shape of the ice confection product and the remainder is transparent and flexible and being put in tight engagement with the corresponding surface of the product by skin packing.

2. 3D ice confection product according to claim 1, characterised in that the self-supporting part is provided with an outwardly extending flange which is provided with a decorative design and/or shape.

3. A method of packaging a 3D ice confection product, characterised in that a sheet of self-supporting packaging material is thermoformed by a pressure difference so that its internal shape exactly conforms to the shape of part of the ice confection product, this product is put into this thermoformed part and is tightly enclosed therein by skin packing with a transparent packaging material.

4. A method according to claim 3 characterised in that the thermoformed part of the self-supporting packaging material is given a relatively wide flange which, wile or after closing the package, is provided with a decorative shape.

## Ansprüche

1. 3D-Eiskonfektprodukt, das in einer undurchlässigen Verpackung aus Verpackungsmaterial eingeschlossen ist, dadurch gekennzeichnet, daß ein Teil des Verpackungsmaterials selbsttragend ist und so vorgeformt ist, daß es exakt mit der Form des Eiskonfektprodukts übereinstimmt, und der Rest transparent und flexibel ist und durch Hautverpackung in dichten Angriff an der entsprechenden Fläche des Produkts gebracht ist.

2. 3D-Eiskonfektprodukt nach Anspruch 1, dadurch gekennzeichnet, daß der selbsttragende Teil mit einem nach außen abstehenden Flansch versehen ist, der eine dekorative Ausführung und/oder Form aufweist.

3. Verfahren zum Verpacken eines 3D-Eiskonfektprodukts, dadurch gekennzeichnet, daß man einen Bogen selbsttragenden Verpakkungsmaterials durch eine Druckdifferenz so thermoformt, daß seine Innenform genau mit der Form eines Teils des Eiskonfektprodukts übereinstimmt, dieses Produkt in diesen thermogeformten Teil hineingibt und es darin durch Hautverpackung mit einem transparenten Verpackungsmaterial dicht einschließt.

4. Verfahren nach Anspruch 3, dadurch gekennzeichnet, daß man den thermogeformten Teil des selbsttragenden Verpackungsmaterials mit einem relativ breiten Flansch versieht, den man während des Schließens oder nach dem Schließen der Verpackung mit einer dekorativen Form versieht.

## Revendications

1. Produit de confiserie glacée 3D enfermé dans un emballage étanche de matériau d'emballage, caractérisé en ce qu'une partie du matériau d'emballage est autoporteuse et a été préformée de façon à se conformer exactement à la forme du produit de confiserie glacée et le reste est transparent et flexible et est mis en relation étroite avec la surface correspondante du produit par emballage moulant.

2. Produit de confiserie glacée 3D selon la revendication 1, caractérisé en ce que la partie autoporteuse est munie d'un rebord s'étendant vers l'extérieur qui est prévu avec un dessin décoratif et/ou une forme décorative.

3. Un procédé d'emballage d'un produit de confiserie glacée 3D, caractérisé en ce qu'une feuille de matériau d'emballage autoporteur est thermoformée par une différence de pression de façon à ce que sa forme interne se conforme exactement à la forme de la partie du produit de confiserie glacée, ce produit est mis dans cette partie thermoformée et y est étroitement enfermée par emballage moulant avec un matériau d'emballage transparent.

4. Un procédé selon la revendication 3 caractérisé en ce que la partie thermoformée du matériau d'emballage autoporteur a un rebord relativement large qui, pendant ou après la fermeture de l'emballage, est fourni avec une forme décorative.

EP 0 278 576 B1

# Fig.1.

# Fig.2.

4